(19) Europäisches Patentamt
European Patent Office
Office européen des brevets

(11) Veröffentlichungsnummer: **0 014 683**
**B1**

(12) # EUROPÄISCHE PATENTSCHRIFT

(45) Veröffentlichungstag der Patentschrift: **23.12.81**

(51) Int. Cl.³: **C 07 D401/14**, C 08 K 5/34 // (C07D401/14, 251/54, 211/08)

(21) Anmeldenummer: **80810033.3**

(22) Anmeldetag: **31.01.80**

(54) **Neue Polyalkylpiperidinderivate von s-Triazinen, deren Verwendung als Stabilisatoren für Polymere und mit diesen Verbindungen stabilisierte Polymerzusammensetzungen.**

(30) Priorität: **06.02.79 CH 1146/79**

(43) Veröffentlichungstag der Anmeldung: **20.08.80 (Patentblatt 80/17)**

(45) Bekanntmachung des Hinweises auf die Patenterteilung: **23.12.81 Patentblatt 81/51**

(84) Benannte Vertragsstaaten: **CH DE FR GB IT**

(56) Entgegenhaltungen:
**EP - A - 0 003 542**
**DE - A - 2 319 816**

(73) Patentinhaber: **CIBA-GEIGY AG**
**Patentabteilung Postfach**
**CH-4002 Basel (CH)**

(72) Erfinder: **Rody, Jean, Dr.**
**Rütiring 82**
**CH-4125 Riehen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 014 683 B1**

Imprimerie Jouve, 17, rue du Louvre, 75001 Paris, France

# Neue Polyalkylpiperidinderivate von s-Triazinen deren Verwendung als Stabilisatoren für Polymere und mit diesen Verbindungen stabilisats Polymerzusammensetzungen

Die Erfindung betrifft neue Polyalkylpiperidinderivate von s-Triazinen und ihre Verwendung als Stabilisatoren für Polymere.

Es handelt sich hierbei um Verbindungen der Formel I

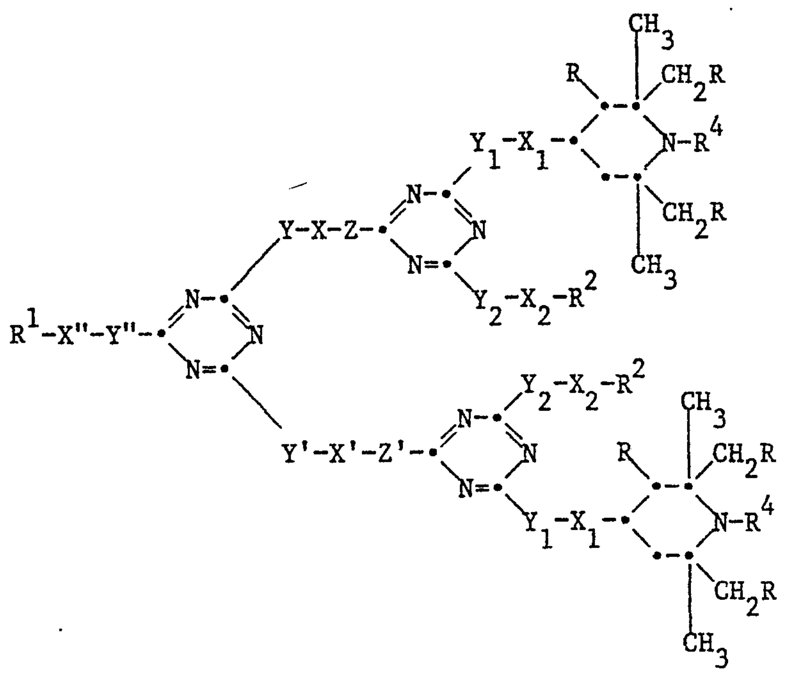

(I)

worin

X und X' $C_2$-$C_{12}$-Alkylen, das durch -O-, -S- oder -$NR^3$- unterbrochen sein kann, oder p-Xylylen bedeuten,

X" eine der für X und X' gegebenen Bedeutungen hat oder eine direkte Bindung oder eine Gruppe -$OCH_2CH_2CH_2$-, deren O nicht an Y" gebunden ist, bedeutet,

$X_1$ und $X_2$ eine direkte Bindung, $C_1$-$C_4$-Alkylen oder eine Gruppe -$OCH_2CH_2CH_2$-, deren O nicht an $Y_1$ oder $Y_2$ gebunden ist, bedeutet,

$Y_1$, $Y_2$, Z und Z' -O-, -S-, -NH- oder -$NR^3$- bedeuten,

Y, Y' und Y" -O-, -S-, -NH-, -$NR^3$- oder -$NR^5$- bedeuten,

R Wasserstoff oder Methyl ist,

$R^1$ Wasserstoff, $C_1$-$C_{18}$-Alkyl, $C_2$-$C_8$-Alkoxyalkyl, $C_2$-$C_4$-Hydroxyalkyl, $C_5$-$C_{12}$-Cycloalkyl, Allyl, Benzyl, $C_6$-$C_{10}$-Aryl, durch 1 oder 2 $C_1$-$C_8$-Alkylgruppen und/oder OH und/oder $C_1$-$C_4$-Alkoxy substituiertes Phenyl oder eine Polyalkylpiperidinylgruppe der Formel II darstellt

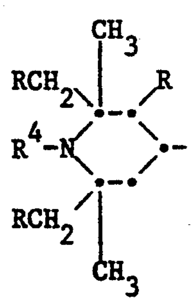

(II)

oder im Falle, dass Y" -$NR^3$- ist und X" eine direkte Bindung ist, $R^1$ und $R^3$ zusammen mit dem N-Atom einen Pyrrolidin-, Piperidin- oder Morpholinring bilden oder $R^1$ einen Rest der Formel III darstellt

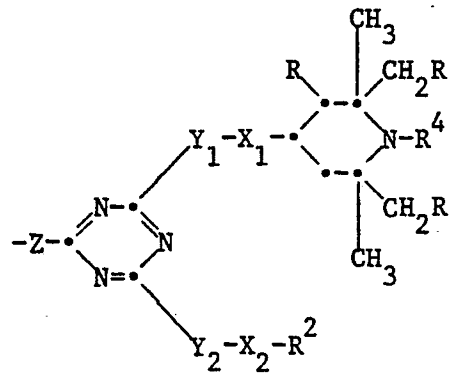

(III)

oder die Gruppe $R^1$-X″-Y″-Chlor bedeutet,

$R^2$ $C_1$-$C_{18}$ Alkyl, $C_2$-$C_8$ Alkoxyalkyl, $C_2$-$C_4$ Hydroxyalkyl, $C_5$-$C_{12}$ Cycloalkyl, Allyl, Benzyl, $C_6$-$C_{10}$ Aryl, durch 1 oder 2 $C_1$-$C_8$ Alkylgruppen und/oder OH und/oder $C_1$-$C_4$ Alkoxy substituiertes Phenyl oder eine Polyalkylpiperidinylgruppe der Formel II darstellt, oder im Falle, dass $Y_2$ -$NR^3$- ist und $X_2$ eine direkte Bindung ist, $R^2$ und $R^3$ zusammen mit dem N-Atom einen Pyrrolidin-, Piperidin- oder Morpholinring bilden,

$C_1$-$C_{18}$ Alkyl, $C_2$-$C_8$ Alkoxyalkyl, $C_2$-$C_4$ Hydroxyalkyl, $C_5$-$C_{12}$ Cycloalkyl, Allyl, Benzyl, $C_6$-$C_{10}$ Aryl, durch 1 oder 2 $C_1$-$C_8$ Alkylgruppen und/oder OH und/oder $C_1$-$C_4$ Alkoxy substituiertes Phenyl oder eine Polyalkylpiperidinylgruppe der Formel II darstellt,

$R^4$ Wasserstoff, $O_0$, $C_1$-$C_{18}$-Alkyl, Allyl oder Benzyl ist und

$R^5$ ein Rest der Formel IV

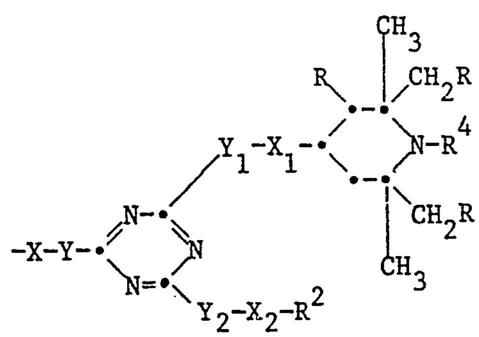

(IV)

ist.

$R^1$, $R^2$, $R^3$ und $R^4$ als $C_1$-$C_{18}$ Alkyl können dabei verzweigte oder unverzweigte Alkylreste sein, z.B. Methyl, Aethyl, Isopropyl, tert.-Butyl, Hexyl, Isooctyl, Decyl, Dodecyl, Tetradecyl, Hexadecyl oder Octadecyl.

$R^1$, $R^2$, $R^3$ als Alkoxyalkyl können z.B. Methoxymethyl, 2-Methoxyäthyl, 2-Aethoxyäthyl, 2-Isopropoxyäthyl, 2-n-, sec.- oder tert.- Butoxyäthyl oder 2-Butoxypropyl sein.

$R^1$, $R^2$, $R^3$ als Hydroxyalkyl können z.B. 2-Hydroxyäthyl, 2-Hydroxypropyl, 2-Hydroxybutyl oder 3-Hydroxypropyl sein.

$R^1$, $R^2$, $R^3$ als $C_5$-$C_{12}$ Cycloalkyl können beispielsweise Cyclopentyl, Cyclohexyl, 3-Methylcyclohexyl, 4-tert.-Butylcyclohexyl, Cyclooctyl oder Cyclododecyl sein.

$R^1$, $R^2$, $R^3$ als $C_6$-$C_{10}$ Aryl können Phenyl oder Naphthyl sein, wobei Phenyl bevorzugt ist.

$R^1$, $R^2$, $R^3$ als substituiertes Phenyl, können z.B. p.Tolyl, 4-Hydroxyphenyl, 4-tert.-Butylphenyl oder 3,5-Di-tert.-butyl-4-hydroxyphenyl sein.

$X_1$ und $X_2$ als $C_1$-$C_4$ Alkylen kann beispielsweise Methylen, Aethylen, 1,3-Propylen, 1,2-Propylen, 1,1-Dimethyläthylen oder 2,2-Propylen sein.

X, X′ und X″ als Alkylen kann eine verzweigte oder unverzweigte Alkylengruppe sein, wie z.B. Aethylen, Tri-, Tetra-, Hexa-, Octa-, Deca- oder Dodecamethylen, 2,2-Dimethylpropylen-1,3, 1,2-Butylen oder 1,2-Propylen.

Es sind aus der DE-OS 2 319 816 bereits einfache Polyalkylpiperidinderivate von s-Triazinen der Formel

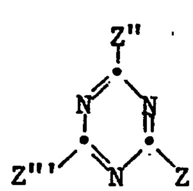

bekannt, worin mindestens einer der Substituenten Z', Z'', Z''' eine über O, S oder N an den Triazinrest gebundene Polyalkylpiperidingruppe ist. Diese bekannten Polyalkylpiperidinderivate von s-Triazinen sind ausgezeichnete Lichtschutzmittel für Polymere. Für bestimmte Verwendungszwecke ist jedoch die Flüchtigkeit und Migrationstendenz dieser bekannten Verbindungen für eine technische Anwendung zu hoch. Dies ist dann der Fall, wenn das Polymere in dünnen Schichten verwendet wird, wie z.B. in Fasern, Faserbändchen, Folien oder Lacken, und eine Stabilisierung über eine längeren Zeitraum erforderlich ist. Es wurde gefunden, dass die vorhin definierten neuen Polyalkylpiperidinderivate von s-Triazinen eine wesentlich geringere Flüchtigkeit bzw. Migrationstendenz besitzen, sodass sie auch in Polymeren von geringer Dicke über lange Zeit stabilisierend wirksam sind.

Ein weiterer Vorteil der erfindungsgemässen Verbindungen der Formel I ist ihre geringe Extrahierbarkeit. Dies äussert sich beispielsweise bei der Beschichtung von Textilien aus stabilisierten synthetischen Fasern mit Kunststoff-Latices, wobei der Stabilisator aus der Faser extrahiert werden kann. Beispiel hierfür ist die Rückenbeschichtung von Teppichen durch Aufbringen eines Kunststoff-Latex.

Bevorzugt sind solche Verbindungen der Formel I, worin R Wasserstoff ist. Es handelt sich dabei um Derivate des 2,2,6,6-Tetramethylpiperidin. Bevorzugt sind auch Verbindungen der Formel I, worin $R^4$ Wasserstoff oder Methyl ist. Bevorzugt sind ferner Verbindungen der Formel I, worin Y, Y' und Y'' -O-, -NH- oder -$NR^5$- darstellen, insbesondere worin Y, Y' und Y'' -NH- oder -$NR^5$- darstellen.

Eine bevorzugte Gruppe von Verbindungen der Formel I sind solche der Formel V,

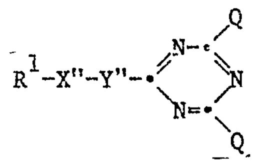

(V)

worin Q einen Rest der Formel VI bedeutet

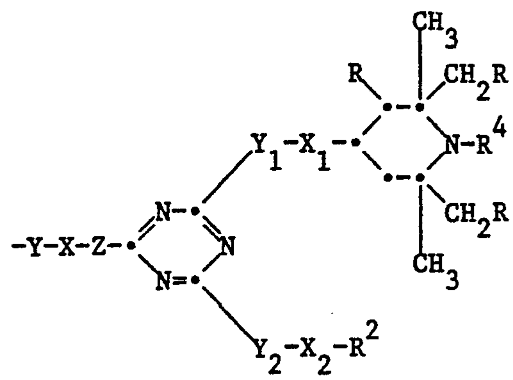

(VI)

insbesondere solche Verbindungen der Formel V, worin Q einen Rest der Formel VII bedeutet,

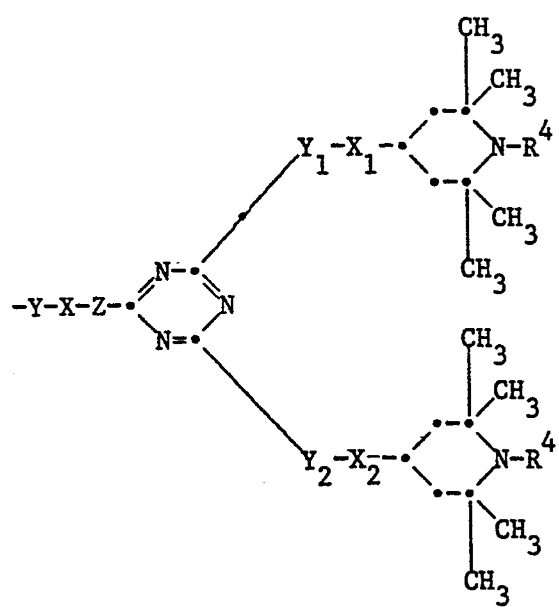

(VII)

worin X $C_2$-$C_{12}$-Alkylen, $X_1$ und $X_2$ eine direkte Bindung oder $C_1$-$C_4$-Alkylen, Y -NH- oder -$NR^5$-, $Y_1$ und $Y_2$ -NH- oder -$NR^3$-, Z -NH-, $R^3$ $C_1$-$C_{12}$-Alkyl oder einen Rest der Formel VIII,

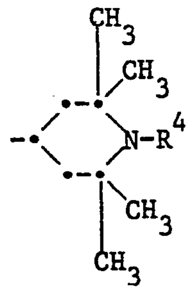

(VIII)

$R^4$ Wasserstoff, $C_1$-$C_4$-Alkyl, Allyl oder Benzyl und $R^5$ einen rest der Formel IX

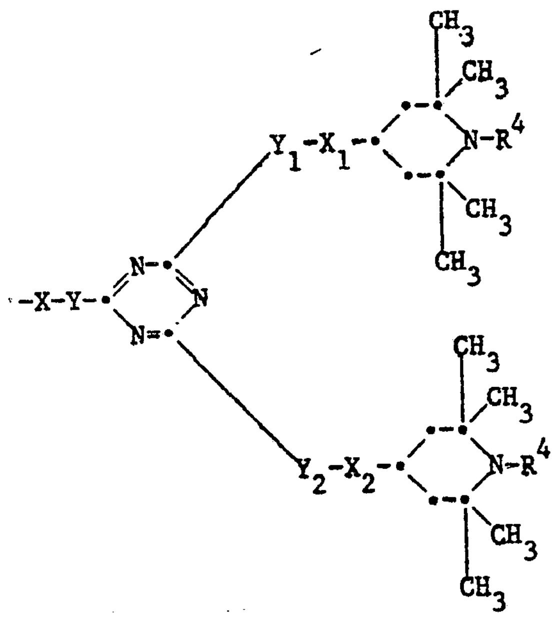

(IX)

bedeuten.

In den Verbindungen der Formel V sind die Reste Q identisch, wodurch sich die Herstellung solcher Verbindungen vereinfacht. Noch einfacher ist die Herstellung von Triazinverbindungen der Formel I mit 3 identischen Substituenten am Triazinring. Daher sind Verbindungen der allgemeinen Formel X besonders bevorzugt,

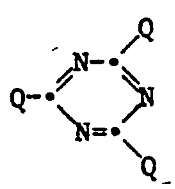

(X)

worin Q die oben angegebene Bedeutung der Formel VI hat.

Unter diesen Verbindungen der Formel X sind solche bevorzugt, in denen Q ein Rest der Formel VII ist.

Die Herstellung der Verbindungen der Formel I erfolgt durch stufenweise Umsetzung von Cyanursäurechlorid mit

a) einer Verbindung $R^1$-X''-Y''H

b) einer Verbindung 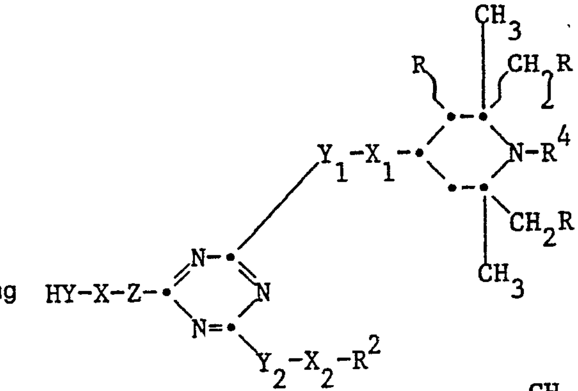

und

c) einer Verbindung 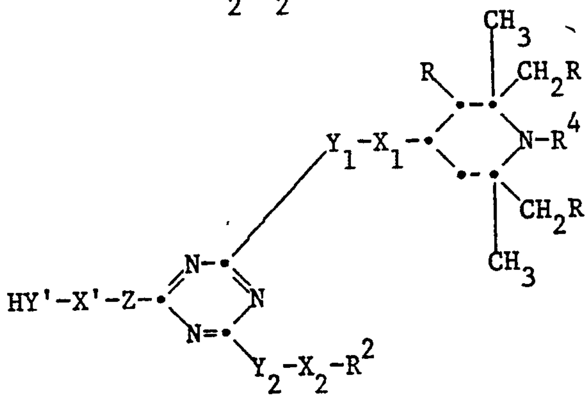

in Gegenwart von säurebindenden Mitteln nach an sich bekannten Verfahren für die stufenweise Umsetzung von Cyanursäurechlorid mit Hydroxyl-, Thiol- und Aminoverbindungen. Man arbeitet hierbei vorzugsweise unter Verwendung eines Lösungsmittels. Hierfür kommt entweder ein organisches Lösungsmittel in Frage wie z.B. Benzol, Toluol oder Dioxan, oder man arbeitet in wässrigem Medium, insbesondere in Gemischen von Wasser mit einem wasserlöslichen organischen Lösungsmittel wie z.B. Aceton oder Methanol. Als säurebindende Mittel verwendet man anorganische oder organische Basen, wie z.B. NaOH, KOH, $Na_2CO_3$, MgO, Triäthylamin oder Pyridin.

Die Reihenfolge der Reaktionsschritte kann auch abgeändert werden, indem man z.B. zuerst die Reaktioîn b) und c) und dann die Reaktion a) durchführt.

Bei der Herstellung von Verbindungen der Formel I, in denen $R^1$-X″-Y″- Chlor bedeutet, entfällt die Reaktionsstufe a), d.h. Cyanursäurechlorid wird nur gemäss b) und c) umgesetzt.

Bei der Herstellung von Verbindungen der Formel V ist die Stufe b) identisch mit c) so dass diese zu einem gemeinsamen Reaktionsschritt vereinigt werden können.

Bei der Herstellung von Verbindungen der Formel X sind die Stufen a), b) und c) identisch und können zu einem Reaktionsschritt vereinigt werden.

Die nach den ersten beiden Stufen entstehenden Zwischenprodukte brauchen nicht isoliert und gereinigt werden, d.h. die einzelnen Reaktionsstufen können hintereinander im selben Reaktionsgefäss erfolgen.

Die Endprodukte der Formel I sind vorwiegend feste Verbindung, die durch Umkristallisation gereinigt werden können. Meist fallen sie in so hoher Reinheit an, dass sie ohne weitere Reinigung als Kunststoff-Stabilisatoren verwendet werden können.

Die für die Reaktionsstufen b) und c) benötigten Reaktanten können ebenfalls durch stufenweise Umsetzung von Cyanursäurechlorid mit Hydroxyl-, Thiol- oder Aminoverbindungen hergestellt werden.

Nähere Einzelheiten der Herstellung können den Beispielen entnommen werden.

Die Verbindungen der Formel I sind als Stabilisatoren für Polymere verwendbar, sie zeichnen sich vor allem durch eine hervorragende Lichtschutzwirkung aus. Beispiele für Polymere, die durch den Zusatz von Verbindungen der Formel I stabilisiert werden können, sind :

1. Polymere von Mono- und Diolefinen, beispielsweise Polyäthylen (das gegebenenfalls vernetzt sein kann), Polypropylen, Polyisobutylen, Polymethylbuten-1, Polymethylpenten-1, Polyisopren oder Polybutadien.

2. Mischungen der unter 1) genannten Polymeren, z.B. Mischungen von Polypropylen mit Polyäthylen oder mit Polyisobutylen.

3. Copolymere von Mono- und Diolefinen, wie z.B. Aethylen-Propylen-Copolymere, Propylen-Buten-1-Copolymere, Propylen-Isobutylen-Copolymere, Aethylen-Buten-1-Copolymere sowie Terpolymere von Aethylen mit Propylen und einem Dien, wie Hexadien, Dicyclopentadien oder Aethylidennorbornen.

4. Polystyrol.

5. Copolymere von Styrol oder α-Methylstyrol mit Dienen oder Acrylderivaten, wie z.B. Styrol-Butadien, Styrol-Acrylnitril, Styrol-Acrylnitril-Methylacrylat ; Mischungen von hoher Schlagzähigkeit aus

Styrol-Copolymeren und einem anderen Polymer wie z.B. einem Polyacrylat, einem Dien-Polymeren oder einem Aethylen-Propylen-Dien-Terpolymeren ; sowie Block-Copolymere des Styrols, wie z.B. Styrol-Butadien-Styrol, Styrol-Isopren-Styrol oder Styrol-Aethylen/Butylen-Styrol.

6. Graft- oder Pfropfcopolymere von Styrol, wie z.B. Styrol auf Polybutadien, Styrol und Acrylnitril auf Polybutadien sowie deren Mischungen mit den unter 5) genannten Copolymeren, wie sie als sogenannte ABS-Polymere bekannt sind.

7. Halogenhaltige Polymere, wie z.B. Polyvinylchlorid, Polyvinylidenchlorid, Polyvinylfluorid, Polychloropren, Chlorkautschuke und Copolymere wie Vinylchlorid-Vinylidenchlorid, Vinylchlorid-Vinylacetat oder Vinylidenchlorid-Vinylacetat.

8. Polymere, die sich von $\alpha,\beta$-ungesättigten Säuren und deren Derivaten ableiten, wie Polyacrylate und Polyacrylnitril.

9. Polymere, die sich von ungesättigten Alkoholen und Aminen bzw. deren Acylderivaten oder Acetalen ableiten, wie Polyvinylalkohol, Polyvinyl-acetat, -stearat, -benzoat, -maleat, Polyvinylbutyral, Polyallylphthalat, Polyallylmelamin und deren Copolymere mit anderen Vinylverbindungen, wie Aethylen/Vinylacetat-Copolymere.

10. Homo- und Copolymere von Epoxyden, wie Polyäthylenoxyd, Polypropylenoxyd oder deren Copolymere mit Bisglycidyläthern.

11. Polyacetale, wie Polyoxymethylen, sowie solche Polyoxymethylene, die als Comonomeres Aethylenoxyd enthalten.

12. Polyphenylenoxyde.

13. Polyurethane und Polyharnstoffe.

14. Polycarbonate.

15. Polysulfone.

16. Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.

17. Polyester, die sich von Dicarbonsäuren und Dialkoholen und/oder von Hydroxycarbonsäuren oder den entsprechenden Lactonen ableiten, wie Polyäthylenterephthalat, Polybutylenterephthalat, Poly-1,4-dimethylolcyclohexanterephthalat, sowie Block-Polyäther-ester, die sich von Polyäthern mit Hydroxylendgruppen und Dicarbonsäuren ableiten.

18. Vernetzte Polymerisate, die sich von Aldehyden einerseits und Phenolen, Harnstoffen und Melaminen andererseits ableiten, wie Phenol-Formaldehyd- Harnstoff-Formaldehyd- und Melamin-Formaldehydharze.

19. Alkydharze, wie Glycerin-Phthalsäure-Harze und deren Gemische mit Melamin-Formaldehydharzen.

20. Ungesättigte Polyesterharze, die sich von Copolyestern gesättigter und ungesättigter Dicarbonsäuren mit mehrwertigen Alkoholen, sowie Vinylverbindungen als Vernetzungsmitteln ableiten, wie auch deren halogenhaltige, schwerbrennbare Modifikationen.

21. Vernetzte Epoxidharze, die sich von Polyepoxiden ableiten, z.B. von Bis-glycidyläthern oder von cycloaliphatischen Diepoxiden.

22. Natürliche Polymere, wie Cellulose, Gummi, sowie deren polymerhomolog chemisch abgewandelte Derivate, wie Celluloseacetate, -propionate und -butyrate, bzw. die Celluloseäther, wie Methylcellulose.

Von diesen Polymeren sind die Gruppen 1-7, 13 und 16 hervorzuheben, da in diesen Substraten die erfindungsgemässen Stabilisatoren eine besonders markante Wirkung haben. Ausserdem sind Polymere, die als Lackharze verwendet werden, vn besonderer Bedeutung.

Die Stabilisatoren der Formel I werden den Substraten in einer Konzentration von 0,01 bis 5 Gew.-%, berechnet auf das zu stabilisiertende Material, einverleibt.

Vorzugsweise werden 0,01 bis 1,0, besonders bevorzugt 0,02 bis 0,5 Gew.-% der Verbindungen, berechnet auf das zu stabilisierende Material, in dieses eingearbeitet. Die Einarbeitung kann beispielsweise durch Einmischen mindestens eines der erfindungsgemässen Lichtschutzmittel und gegebenenfalls weiterer Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen.

Das so stabilisierte Polymere kann ausserdem noch andere Stabilisatoren oder sonstige in der Kunststofftechnologie übliche Zusätze enthalten, wie sie beispielsweise in der DE-OS 2 349 962, Seite 25-32, aufgeführt sind. Dies betrifft insbesondere den Zusatz von Weichmachern, Gleitmitteln, Pigmenten, Füllstoffen, Verstärkungsstoffen, Flammschutzmitteln, Antistatika, Lichtschutzmitteln, Antioxydantien oder Metalldesaktivatoren.

Bei der Mitverwendung bekannter Stabilisatoren können synergystische Effekte auftreten, was besonders bei Mitverwendung von anderen Lichtschutzmitteln oder von organischen Phosphiten häufig der Fall ist.

Von besonderer Bedeutung ist die Mitverwendung von Antioxydantien bei der Stabilisierung von Polyolefinen.

Die Erfindung betrifft daher auch die durch Zusatz von 0,01 bis 5 Gew.-% einer Verbindung der Formel

I stabilisierten Polymere, die gegebenenfalls noch andere bekannte und übliche Zusätze enthalten können. Die so stabilisierten Polymere können in verschiedenster Form angewendet werden z.B. als Folien, Fasern, Bändchen, Profile oder als Bindemittel für Lacke, Klebemittel oder Kitte.

Von besonderer Bedeutung ist die Anwendung in dünnen Schichten wie in Form von Fasern, Folien und Lacken.

Die Herstellung und Verwendung der erfindungsgemässen Verbindungen wird in den folgenden Beispielen näher beschrieben. Teile bedeuten darin Gewichtsteile und % Gewichtsprozente. Die Temperaturen sind in Celsius-Graden angegeben.

Beispiel 1

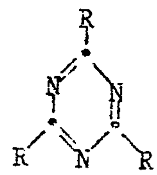

R =

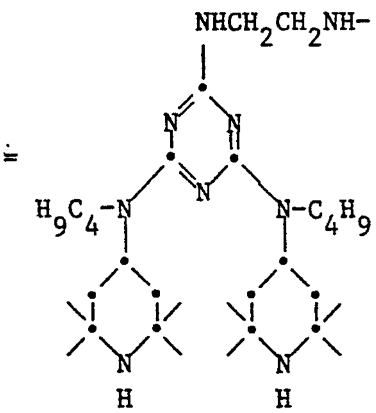

53,6 g 2-Chlor-4,6-bis-(2,2,6,6-tetramethyl-4-piperidyl-butylamino)-1,3,5-triazin werden in 200 ml Aethylendiamin 24 Stunden am Rückfluss gekocht. Das Reaktionsgemisch wird mit 200 ml Toluol und 100 ml 30%iger Natronlauge versetzt und 30 Minuten stark gerührt. Die wässrige Lösung wird abgetrennt, die Toluollösung 2 mal mit 200 ml Wasser gewaschen, über Natriumsulfat getrocknet und eingedampft. Das so erhaltene 2-(2-Aminoäthylamino)-4,6-bis-(2,2,6,6-tetramethyl-4-piperidyl-butylamino)-1,3,5-triazin wird in 200 ml Xylol gelöst und die erhaltene Lösung auf 5° abgekühlt. Bei dieser Temperatur werden 6,1 g Cyanurchlorid eingetragen und das Reaktionsgemisch 1 Stunde bei 5-10° gerührt. Nach der Zugabe von 1,4 g fein pulversisiertem Natriumhydroxid wird die Temperatur auf 35-40° erhöht und 2 Stunden bei dieser Temperatur gerührt. Nach der Zugabe einer neuen Portion von 1,4 g Natriumhydroxid wird langsam auf Rückfluss erhitzt. Nach 3 Stunden Rückfluss wird eine letzte Portion von 1,4 g Natriumhydroxyd zugegeben und das Reaktionsgemisch anschliessend 18 Stunden am Rückfluss gerührt. Nach dem Abkühlen werden 200 ml Wasser zugegeben, 10 Minuten gut gerührt, die wässrige Lösung abgetrennt und die Xylollösung 3 mal mit je 100 ml Wasser gewaschen. Die Xylollösung wird unter Vakuum eingedampft und der Rückstand anschliessend im Hochvakuum getrocknet (130°/0,001 Torr).

Die erhaltene, glasige, gelbliche Masse kann zu einem fast farblosen Pulver zerkleinert werden. Das Lichtschutzmittel mit obiger Strukturformel schmilzt bei ca. 140°.

Beispiel 2

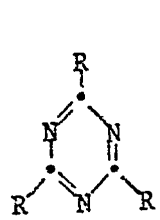

R =

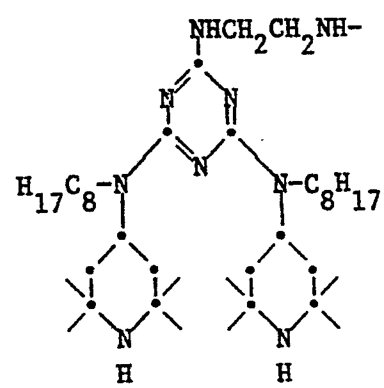

Verwendet man anstelle von 53,6 g 2-Chlor-4,6-bis-(2,2,6,6,-tetramethyl-4-piperidyl-butylamino)-1,3,5-triazin 63,6 g 2-Chlor-4,6-bis-(2,2,6,6-tetramethyl-4-piperidyl-octylamino)-1,3,5-triazin und verfährt man in übrigen wie in Beispiel 1 beschrieben, so erhält man die Verbindung mit obiger Struktur als fast farbloses Pulver mit Schmp. 82-83°.

## Beispiel 3

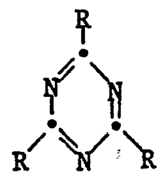

R =

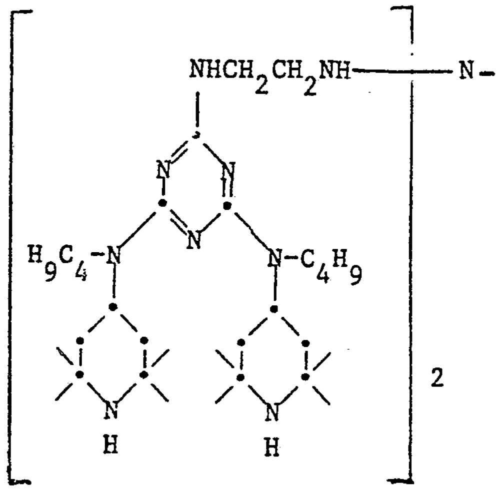

107,2 g 2-Chlor-4,6-bis-(2,2,6,6-tetramethyl-4-piperidyl-butylamino)-1,3,5-triazin werden mit 10,3 g Diäthylentriamin in 300 ml Xylol 12 Stunden am Rückfluss erhitzt. Nach der Zugabe von 8,8 g fein pulverisiertem Natriumhydroxid wird weitere 24 Stunden am Rückfluss gerührt, unter 100° abgekühlt, 200 ml Wasser zugegeben, 10 Minuten gerührt und dann die wässrige Phase abgetrennt. Die Xylollösung wird 3 mal mit je 100 ml Wasser gewaschen. Zum vollständigen Entwässern der Xylollösung werden ca. 20 ml Lösungsmittel abdestilliert und dann die Lösung mit 120 ml trockenem Xylol verdünnt und auf 5-10° abgekühlt. Nach der Zugabe von 6,1 g Cyanurchlorid wird während 2 Stunden bei Raumtemperatur gerührt und dann 1,4 g Natriumhydroxid zugegeben und 2 Stunden bei 40-45° gerührt. Nach einer neuen Zugabe von 1,4 g Natriumhydroxid wird langsam auf Rückfluss erhitzt, 4 Stunden am Rückfluss gerührt, eine letzte Portion von 1,4 g Natriumhydroxid zugegeben und weitere 24 Stunden am Rückfluss gekocht. Das Reaktionsgemisch wird mit 200 ml Wasser versetzt, 10 Minuten lang gerührt und dann die wässrige Phase abgetrennt. Die Xylollösung wird 3 mal mit je 100 ml Wasser gewaschen und im Vakuum eingedampft.

Der Rückstand wird bei 130-40°/0,005 Torr getrocknet. Man erhält das Produkt mit obiger Strukturformel als gelbliche, spröde Masse, die sich leicht zu einem Pulver vom Schmelzpunkt ca. 140° pulverisieren lässt.

## Beispiel 4

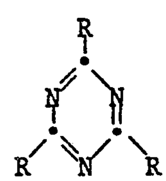

R =

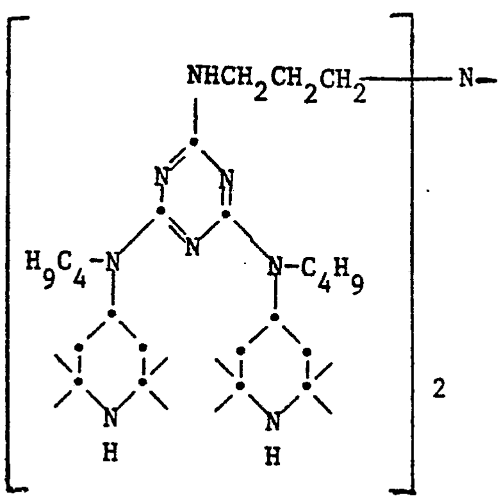

Verwendet man anstelle von 10,3 g Diäthylentriamin 13,1 g Dipropylentriamin und verfährt man im übrigen wie in Beispiel 3 beschrieben, so erhält man die Verbindung mit obiger Struktur als farbloses Pulver mit einem Schmp. von ca. 120°.

Beispiel 5

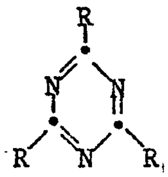

R =

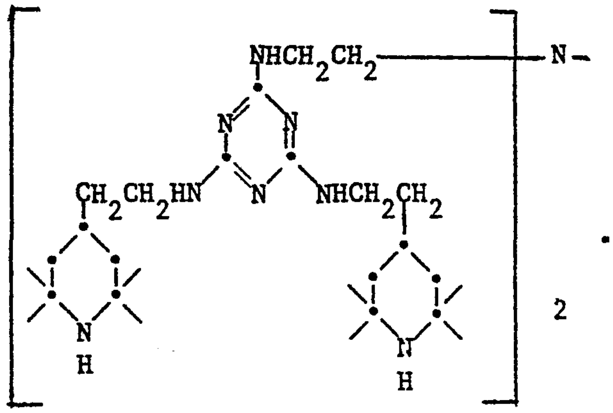

Verwendet man anstelle von 107,2 g 2-Chlor-4,6-bis-(2,2,6,6-tetramethyl-4-piperidyl-butylamino)-1,3,5-triazin 96,0 g 2-Chlor-4,6-bis-[2-(2,2,6,6-tetramethylpiperidyl-4-)äthylamino]-1,3,5-triazin und verfährt man im übrigen wie in Beispiel 3 beschrieben, so erhält man die Verbindung mit obiger Struktur als leicht gelbes Pulver mit einem Schmp. von ca. 100°.

Beispiel 6

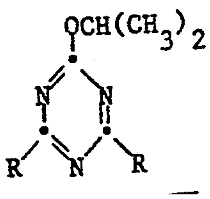

R =

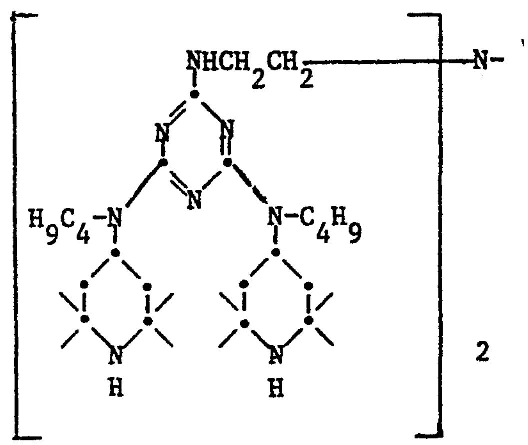

53,6 g 2-Chlor-4,6-bis-(2,2,6,6-tetramethyl-4-piperidyl-butylamino)-1,3,5-triazin werden wie in Beispiel 2 beschrieben mit 5,2 g Diäthylentriamin umgesetzt. Zur entwässerten Xylollösung des erhaltenen Zwischenproduktes werden bei Raumtemperatur 5,2 g 2,4-Dichlor-6-isopropoxy-1,3,5-triazin gegeben und dann 2 Stunden bei 50° gerührt. Nach der Zugabe von 1,0 g fein pulverisiertem Natriumhydroxid wird 12 Stunden am Rückfluss gekocht, 1,1 g Natriumhydroxid zugegeben und weitere 36 Stunden am Rückfluss gekocht. Nach der Aufarbeitung wie in Beispiel 2 erhält man das Produkt von obiger Formel als farbloses Pulver vom Schmelzpunkt ca. 120°.

Beispiel 7

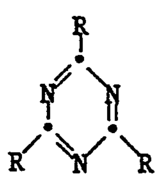

R =

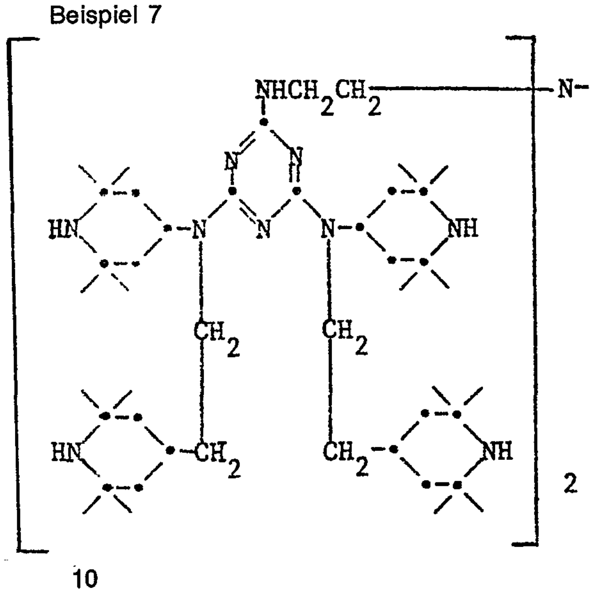

36,9 g Cyanurchlorid werden in 250 ml Aceton gelöst und die Lösung auf 5° gekühlt. Zu dieser Lösung tropft man bei 5-10° in ca. 2 Stunden eine Lösung von 129,4 g 2,2,6,6-Tetramethyl-4-[2-(2,2,6,6-tetramethylpiperidyl-4)-aminoäthyl]-piperidin in 500 ml Wasser und lässt 30 Minuten nachreagieren. Dann tropft man in ca. 5 Minuten eine Lösung von 8,0 g Natriumhydroxid in 50 ml Wasser hinzu und rührt weitere 2 Stunden bei 35-40°. Man tropft erneut eine Lösung von 8,0 g Natriumhydroxid in 50 ml Wasser hinzu und rührt anschliessend 6 Stunden bei 45-50°. Der farblose Niederschlag von 2-Chlor-4,6-bis-[2,2,6,6-tetramethyl-4-piperidyl-2-(2,2,6,6-tetramethylpiperidyl-4-)-äthylamino]-1,3,5-triazin wird abfiltriert, mit Wasser gewaschen, getrocknet und aus Acetonitril umkristallisiert (Schmp. 142°). 45,5 g dieser Verbindung werden mit 3,0 g Diäthylentriamin in 200 ml Xylol 12 Stunden am Rückfluss gekocht. Nach der Zugabe von 2,5 g fein pulverisiertem Natriumhydroxid wird weitere 24 Stunden am Rückfluss gerührt. Das Reaktionsgemisch wird auf ca. 10° abgekühlt und 1,84 g Cyanurchlorid werden eingetragen. Man rührt 2 Stunden bei Raumtemperatur, dann 4 Stunden bei 45-50°, gibt 1,3 g Natriumhydroxid hinzu und lässt dann 24 Stunden unter Rückfluss kochen. Nach dem Abkühlen gibt man 200 ml Wasser zum Reaktionsgemisch, rührt kräftig 10 Minuten und trennt die wässrige Phase ab. Die Xylollösung wird 3 mal mit je 100 ml Wasser gewaschen und dann am Vakuum eingedampft. Der erhaltene Rückstand wird 15 Stunden bei 130°/0,001 Torr getrocknet und dann pulverisiert. Man erhält das Produkt der obigen Formel als fast farbloses Pulver mit Schmp. ca. 130°.

Beispiel 8

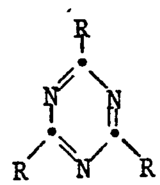

R =

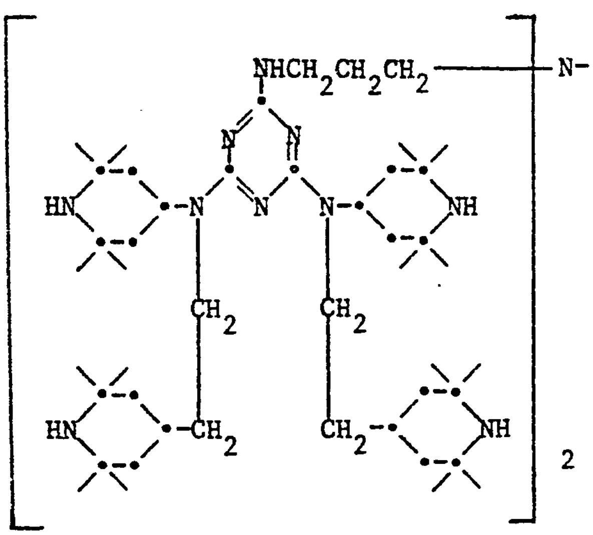

Verwendet man anstelle von 3,0 g Diäthylentriamin 3,9 g Dipropylendiamin und verfährt man im übrigen wie in Beispiel 7 beschrieben, so erhält man die Verbindung mit obiger Struktur als fast farbloses Pulver mit einem Schmp. von ca. 136°.

Beispiel 9

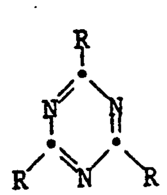

R =

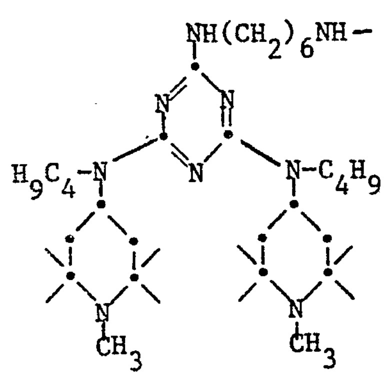

In einer Schmelze von 120 g Hexamethylendiamin werden bei 80° 56,4 g 2-Chlor-4,6-bis-(1,2,2,6,6-pentamethyl-4-piperidyl-butylamino)-1,3,5-triazin eingetragen. Das Reaktionsgemisch wird anschliessend 8 Stunden bei 100° und dann nach Zugabe von 50 ml Xylol 16 Stunden bei 140° gerührt. Man verdünnt mit 200 ml Xylol, gibt eine Lösung von 4,4 g Natriumhydroxid in 50 ml Wasser hinzu und rührt während 4 Stunden bei Raumtemperatur kräftig durch. Die Xylollösung wird im Scheidetrichter von der

wässrigen Phase abgetrennt, über Natriumsulfat getrocknet und im Vakuum eingedampf. 57,9 g des so erhaltenen 2-(6-Aminohexylamino)-4,6-bis-(1,2,2,6,6-pentamethyl-4-piperidyl-butylamino)-1,3,5-triazin werden in 200 ml Xylol gelöst und die erhaltene Lösung auf 5° abgekühlt. Bei dieser Temperatur werden 5,5 g Cyanurchlorid eingetragen und das Reaktionsgemisch 1 Stunde bei 5-10° gerührt. Nach der Zugabe von 1,2 g fein pulverisiertem Natriumhydroxid wird die Temperatur auf 35-40° erhöht und 2 Stunden bei dieser Temperatur gerührt. Nach der Zugabe einer neuen Portion von 1,2 g Natriumhydroxid wird langsam auf Rückfluss erhitzt. Nach 3 Stunden Rückfluss wird eine letzte Portion von 1,4 g Natriumhydroxid zygegeben und das Reaktionsgemisch anschliessend 16 Stunden am Rückfluss gerührt. Nach dem Abkühlen werden 200 ml Wasser zugegeben, 15 Minuten gut gerührt, die wässrige Lösung abgetrennt und die Xylollösung 3 mal mit je 100 ml Wasser gewaschen. Die Xylollösung wird unter Vakuum eingedampft und der Rückstand anschliessend am Hochvakuum getrocknet (130°/0,001 Torr). Die erhaltene, leicht gelbliche Masse kann zu einem fast farblosen Pulver zerkleinert werden. Das Lichtschutzmittel mit obiger Strukturformel schmilzt bei ca. 125°.

Beispiel 10

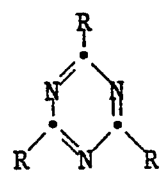

R =

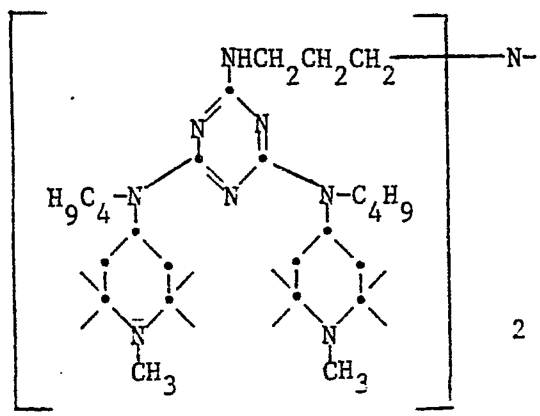

90,2 g 2-Chlor-4,6-bis-(1,2,2,6,6-pentamethyl-4-piperidylbutylamino)-1,3,5-triazin werden mit 10,4 g Dipropylentriamin in 250 ml Xylol 8 Stunden am Rückfluss erhitzt. Nach der Zugabe von 8,0 g fein pulverisiertem Natriumhydroxid wird weitere 16 Stunden am Rückfluss gerührt, unter 100° abgekühlt, 200 ml Wasser zugegeben, 15 Minuten gerührt und dann die wässrige Phase abgetrennt. Die Xylollösung wird 3 mal mit je 100 ml Wasser gewaschen und dann in Vakuum eingedampft. 71,4 g des so erhaltenen, harzigen Zwischenproduktes werden in 300 ml Xylol gelöst und die erhaltene Lösung auf 5-10° abgekühlt. Nach der Zugabe von 3,6 g Cyanurchlorid wird während 2 Stunden bei 10-15° gerührt, 0,8 g Natriumhyroxid zugegeben und 3 Stunden bei 45-50° gerührt. Nach einer neuen Zugabe von 0,8 g Natriumhydroxid wird langsam auf Rückfluss erhitzt, 6 Stunden am Rückfluss gerührt, eine letzte Portion von 1,0 g Natriumhydroxid zugegeben und weitere 18 Stunden am Rückfluss gerührt. Das Reaktionsgemisch wird mit 200 ml Wasser versetzt, 15 Minuten lang gut durchgerührt und dann die wässrige Phase abgetrennt. Die Xylollösung wird 3 mal mit je 100 ml Wasser gewaschen und im Vakuum eingedampft. Der Rückstand wird bei 130-40°/0,005 Torr getrocknet. Man erhält das Produkt obiger Strukturformel als gelbiche Masse, die sich kalt zu einem Pulver vom Schmelzpunkt ca. 145° pulverisieren lässt.

Beispiel 11

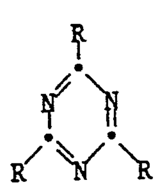

R =

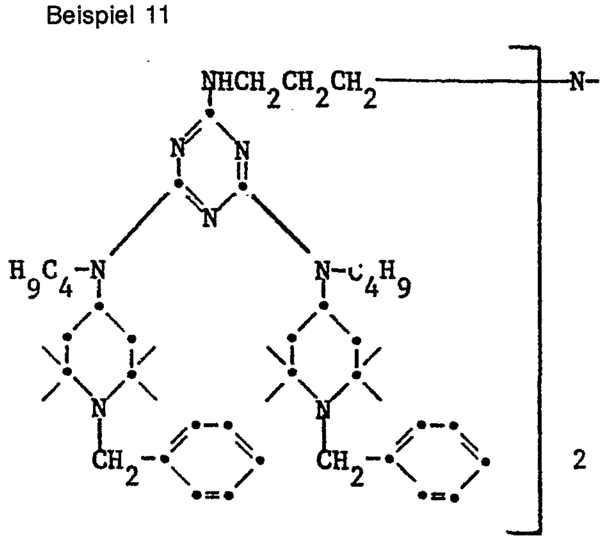

Verwendet man anstelle von 90,2 g 2-Chlor-4,6-bis-(1,2,2,6,6-pentamehyl-4-piperidyl)-butylamino)-1,3,5-triazin 114,0 g 2-Chlor-4,6-bis-(1-benzyl-2,2,6,6-tetramethyl-4-piperidyl-butylamino)-1,3,5-triazin und verfährt man im übrigen wie in Beispiel 10 beschrieben, so erhält man die Verbindung mit obiger Struktur als leicht gelbliches Pulver mit einem Schmelzpunkt von ca. 108°.

Beispiel 12

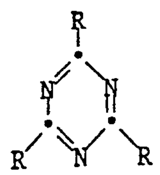

R =

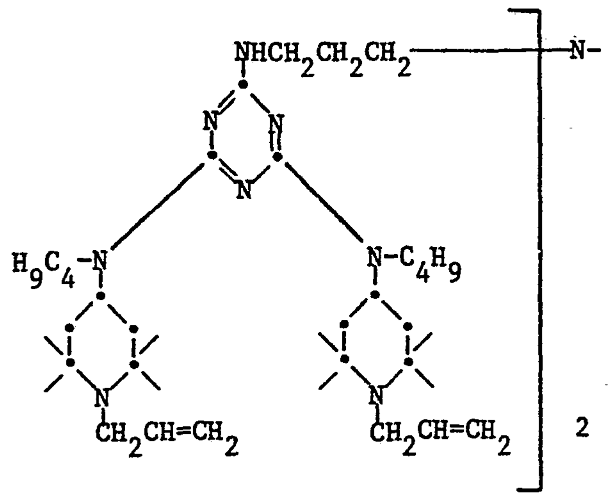

Verwendet man anstelle von 90,2 g 2-Chlor-4,6-bis-(1,2,2,6,6-pentamethyl-4-piperidyl)-butylamino)-1,3,5-triazin 98,6 g 2-Chlor-4,6-bis-(1-allyl-2,2,6,6-tetramethyl-4-piperidyl-butylamino)-1,3,5-triazin und verfährt man im übrigen wie in Beispiel 10 beschrieben, so erhält man die Verbindung mit obiger Struktur als gelbliches Pulver mit einem Schmelzpunkt von ca. 95°.

A. Stabilisierung von Polypropylen gegen Licht

100 Teile Polypropylenpulver (Moplen, Fibre grade, der Firma Montedison) werden mit 0,2 Teilen β-(3,5-Di-tert. butyl-4-hydroxyphenyl)-propionsäure-octadecylester und 0,25 Teilen eines Stabilisators der folgenden Tabelle 1 im Brabender-Plastographen bei 200 °C während 10 Minuten homogenisiert. Die so erhaltene Masse wird möglichst rasch dem Kneter entnommen und in einer Kniehebelpresse zu einer 2-3 mm dicken Platte gepresst. Ein Teil des erhaltenen Rohpresslings wird ausgeschnitten und zwischen zwei Hochglanz-Hartaluminiumfolien mit einer handhydraulischen Laborpresse während 6 Minuten bei 260° zu einer 0,1 mm dicken Folie gepresst, die unverzüglich in kaltem Wasser abgeschreckt wird. Aus dieser werden nun Abschnitte ausgestanzt und im Xenotest 1200 belichtet. Zu regelmässigen Zeitabständen werden diese Prüflinge aus dem Belichtungsapparat entnommen und in einem IR-Spektrophotometer auf ihren Carbonylgehalt geprüft. Die Zunahme der Carbonylextinktion bei 5,85 μ während der Belichtung ist ein Mass für den photoxidativen Abbau des Polymeren (s.L. Balaban et al., J. Polymer Sci, Part C, *22*, 1059-1071 (1969)) und ist erfahrungsgemäss mit einem Abfall der mechanischen Eigenschaften des Polymeren verbunden. Als Mass der Schutzwirkung gilt die Zeit bis Erreichen einer Carbonylextinktion von ca. 0,3, bei welcher die Vergleichsfolie brüchig ist.

Die Schutzwirkung der Stabilisatoren gemäss Erfindung ist aus folgender Tabell 1 ersichtlich :

Tabelle 1

| Lichtschutzmittel | Stunden Xenotest 1200 bis Carbonylextinktion von 0,3 |
|---|---|
| Vergleich ohne Lichtschutzmittel | 800 |
| Produkt des Beispiels 1 | 4 660 |
| Produkt des Beispiels 3 | 4 290 |
| Produkt des Beispiels 4 | 4 350 |
| Produkt des Beispiels 5 | > 3 500 |
| Produkt des Beispiels 6 | 4 350 |
| Produkt des Beispiels 7 | 4 090 |
| Produkt des Beispiels 8 | > 3 500 |

B. Lichtschutzwirkung in Polypropylen-Fasern

1000 Teile unstabilisiertes Polypropylenpulver (Schmelzindex~18) werden in einem Schnellmischer

mit 1 Teil Calziumstearat, 0,5 Teilen Calzium-bis(4'-hydroxy-3',5'-ditertiär-butyl-benzyl-äthylphosphonat), 2,5 Teilen Titandioxid und mit 3 Teilen der in der Tabelle angeführten Lichtschutzmittel gemischt und anschliessend in einem Extruder bei 200 °C extrudiert und granuliert. Das erhaltene Granulat wird in einer Labor-Schmelzspinnanlage bei einer maximalen Temperatur von 270 °C und einer Geschwindigkeit von 600 m/Minute zu einem 403/37 denier Multifilament versponnen. Dieses wird verstreckt und gezwirnt mittels einer Streckzwirnmaschine. Das Streckverhältnis ist 1 : 3, 2, so dass schliesslich Multifilamente 130/37 denier erhalten werden. Diese Multifilamente werden auf weissen Karton montiert, wobei an den Enden des Kartons je ein weiterer Kartonstreifen aufgeheftet wird, so dass die Fäden in mittleren Teil über 5 cm berührungsfrei aufgespannt sind. Die Hälfte der Proben wird im berührungsfreien Teil auf eine Strecke von 1 cm mit dem Acryllatex Primal ®HA 24 (Röhm und Haas) beschichtet. Die Proben werden 20 Minuten bei 120 °C getrocknet und im Xenotest 1200 belichtet.

Die Tabelle 2 gibt die Belichtungszeit bis zu einem Reissfestigkeitsverlust von 50 % als Mass der Schutzwirkung an. Als Vergleich mit dem Stand der Technik werden analoge Monotriazin-Verbindungen der DE-OS 2 319 816 verwendet. Die vergleichsweise geringe Stabilisierung ist vor allem darauf zurückzuführen, dass die Monotriazin-Verbindungen vom Latex aus der Faser extrahiert werden und bei der Trocknung aus der Faser in die Beschichtungsmasse migrieren.

Tabelle 2

| Lichtschutzmittel (jeweils 0,3 %) | Belichtungszeit im Xenotest 1200 bis 50 % Reissdehnung |
|---|---|
| ohne | 440 h |
| Produkt des Beispiels 1 | 2 900 h |
| Produkt des Beispiels 3 | 3 200 h |
| Produkt des Beispiels 7 | 3 100 h |
| Vergleichsprodukte gemäss DE-OS 2 319 816 : | |
| 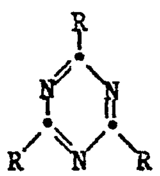 | |
| R = 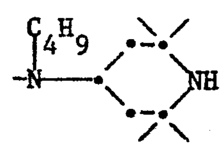 | 1 700 h |
| R = 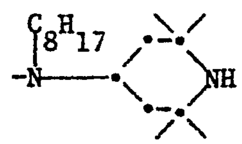 | 1 900 h |
| R = 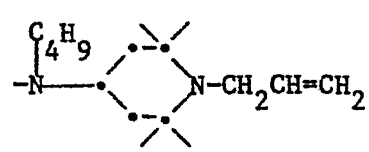 | 700 h |

**Ansprüche**

1. Verbindungen der Formel I

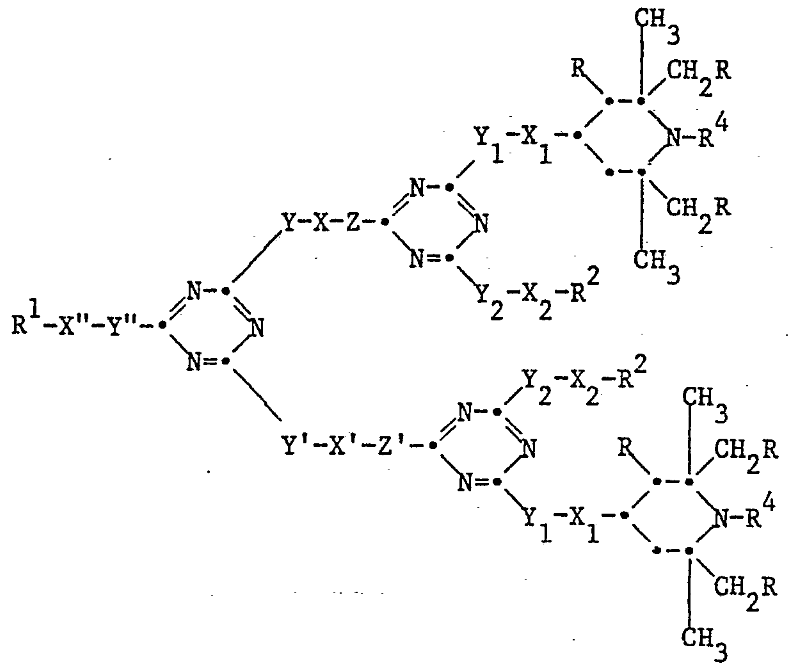

(I)

worin

X und X' $C_2$-$C_{12}$-Alkylen, das durch -O-, -S- oder -$NR^3$- unterbrochen sein kann, oder p-Xylylen bedeuten,

X'' eine der für X und X' gegebenen Bedeutungen hat oder eine direkte Bindung oder eine Gruppe -$OCH_2CH_2CH_2$-, deren O nicht an Y'' gebunden ist, bedeutet,

$X_1$ und $X_2$ eine direkte Bindung, $C_1$-$C_4$-Alkylen oder eine Gruppe -$OCH_2CH_2CH_2$-, deren O nicht an $Y_1$ oder $Y_2$ gebunden ist, bedeutet,

$Y_1$, $Y_2$, Z und Z' -O-, -S-, -NH- oder -$NR^3$- bedeuten,

Y, Y' und Y'' -O-, -S-, -NH-, -$NR^3$- oder -$NR^5$- bedeuten,

R Wasserstoff oder Methyl ist,

$R^1$ Wasserstoff, $C_1$-$C_{18}$-Alkyl, $C_2$-$C_8$-Alkoxyalkyl, $C_2$-$C_4$-Hydroxyalkyl, $C_5$-$C_{12}$-Cycloalkyl, Allyl, Benzyl, $C_6$-$C_{10}$- Aryl, durch 1 oder 2 $C_1$-$C_8$-Alkylgruppen und/oder OH und/oder $C_1$-$C_4$-Alkoxy substituiertes Phenyl oder eine Polyalkylpiperidinylgruppe der Formel II darstellt

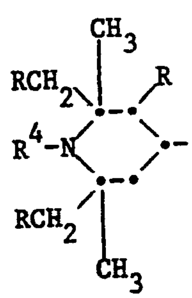

(II)

oder im Falle, das Y'' -$NR^3$- ist und X'' eine direkte Bindung ist, $R^1$ und $R^3$ zusammen mit dem N-Atom einen Pyrrolidin-, Piperidin- oder Morpholinring bilden oder $R^1$ einen Rest der Formel III darstellt

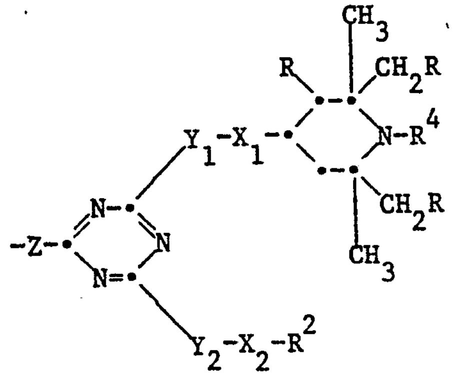

(III)

oder die Gruppe $R^1$-X"-Y"-Chlor bedeutet,

$R^2$ $C_1$-$C_{18}$ Alkyl, $C_2$-$C_8$ Alkoxyalkyl, $C_2$-$C_4$ Hydroxyalkyl, $C_5$-$C_{12}$ Cycloalkyl, Allyl, Benzyl, $C_6$-$C_{10}$ Aryl, durch 1 oder 2 $C_1$-$C_8$ Alkylgruppen und/oder OH und/oder $C_1$-$C_4$ Alkoxy substituiertes Phenyl oder eine Polyalkylpiperidinylgruppe der Formel II darstellt, oder im Falle, dass $Y_2$ -$NR^3$- ist und $X_2$ eine direkte Bindung ist, $R^2$ und $R^3$ zusammen mit dem N-Atom einen Pyrrolidin-, Piperidin- oder Morpholinring bilden,

$R^3$ $C_1$-$C_{18}$ Alkyl, $C_2$-$C_8$ Alkoxyalkyl, $C_2$-$C_4$ Hydroxyalkyl, $C_5$-$C_{12}$ Cycloalkyl, Allyl, Benzyl, $C_6$-$C_{10}$ Aryl, durch 1 oder 2 $C_1$-$C_8$ Alkylgruppen und/oder OH und/oder $C_1$-$C_4$ Alkoxy substituiertes Phenyl oder eine Polyalkylpiperidinylgruppe der Formel II darstellt,

$R^4$ Wasserstoff, $O_0$, $C_1$-$C_{18}$-Alkyl, Allyl oder Benzyl ist und

$R^5$ ein Rest der Formel IV

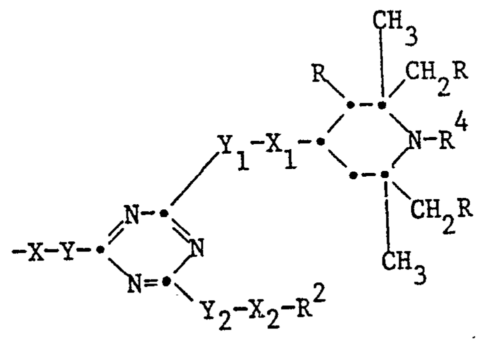

(IV)

ist.

2. Verbindungen gemäss Anspruch 1 der Formel I, worin R Wasserstoff ist,
3. Verbindungen gemäss Anspruch 1 der Formel I, worin $R^4$ Wasserstoff oder Methyl ist.
4. Verbindungen gemäss Anspruch 1 der Formel I, worin Y, Y' und Y"-O-, -NH- oder -$NR^5$- bedeuten.
5. Verbindungen gemäss Anspruch 1 der Formel V,

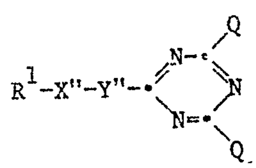

(V)

worin

Q einen Rest der Formel VI bedeutet und

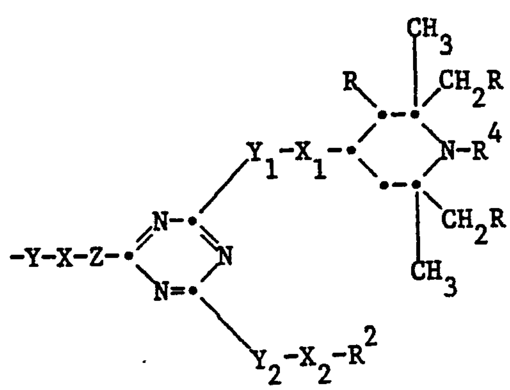

(VI)

$R^1$, X", Y", Y, X, $Y^1$, $X^1$, $Y^2$, $X^2$, R und $R^4$ die in Anspruch 1 gegebene Bedeutung haben.

6. Verbindungen gemäss Anspruch 5 der Formel V, worin Q eine Gruppe der Formel VII bedeutet,

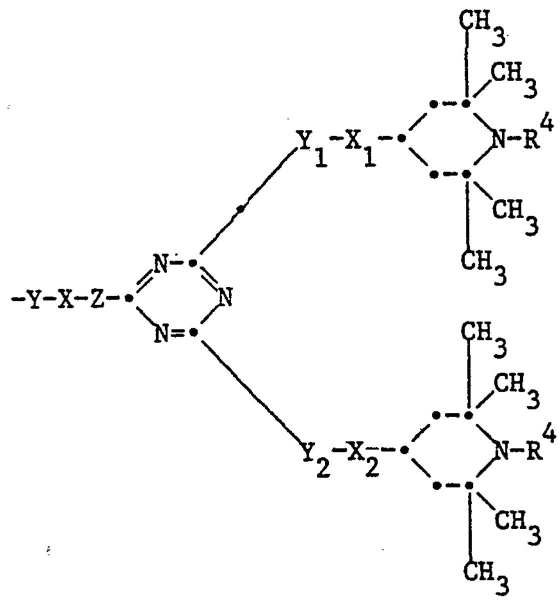

(VII)

worin

X $C_2$-$C_{12}$-Alkylen,

$X_1$ und $X_2$ eine direkte Bindung oder $C_1$-$C_4$-Alkylen,

Y -NH- oder -$NR^5$-,

$Y_1$ und $Y_2$ -NH- oder -$NR^3$- ,

Z -NH-,

$R^3$ $C_1$-$C_{12}$-Alkyl oder einen Rest der Formel VIII,

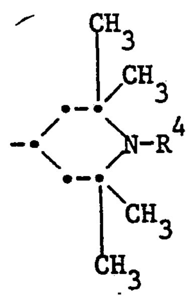

(VIII)

$R^4$ Wasserstoff, $C_1$-$C_4$-Alkyl, Allyl oder Benzyl und $R^5$ einen Rest der Formel IX

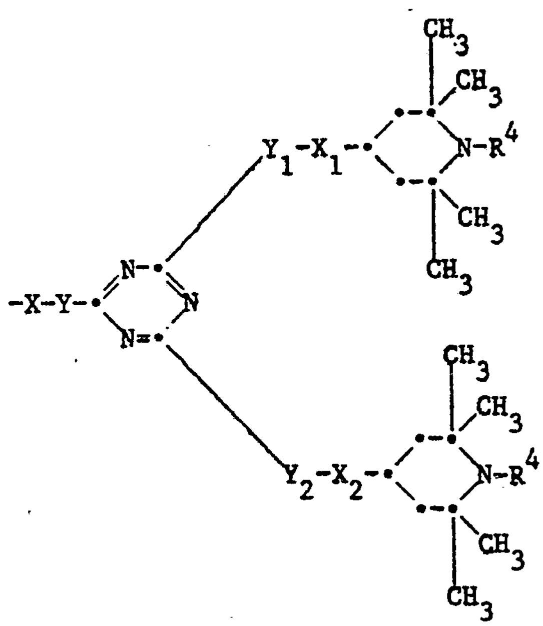

(IX)

bedeuten.

7. Verbindungen gemäss Anspruch 1 der Formel X

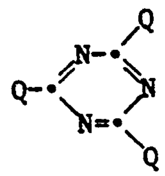

(X)

worin Q die in Anspruch 5 gegebene Bedeutung hat.

8. Verbindungen gemäss Anspruch 7 der Formel X, worin Q die in Anspruch 6 gegebene Bedeutung hat.

9. Verwendung von Verbindungen der Formel I des Anspruches 1 als Stabilisatoren für Polymere, insbesondere gegen deren Schädigung durch Licht.

10. Verfahren zum Stabilisieren von Polymeren durch Zusatz mindestens einer Verbindung der Formel I des Anspruchs 1.

11. Gegen Lichteinwirkung stabilisierte Polymerzusammensetzung gekennzeichnet durch einen Gehalt von 0,01 bis 5 Gewichts-% mindestens einer Verbindung der Formel I des Anspruches 1.

12. Polymerzusammensetzung gemäss Anspruch 11, dadurch gekennzeichnet, dass das Polymere ein Polyolefin ist.

13. Polymerzusammensetzung gemäss Anspruch 11, dadurch gekennzeichnet, dass das Polymere ein Bindemittel für einen Lack ist.

## Claims

1. A compound of the formula I

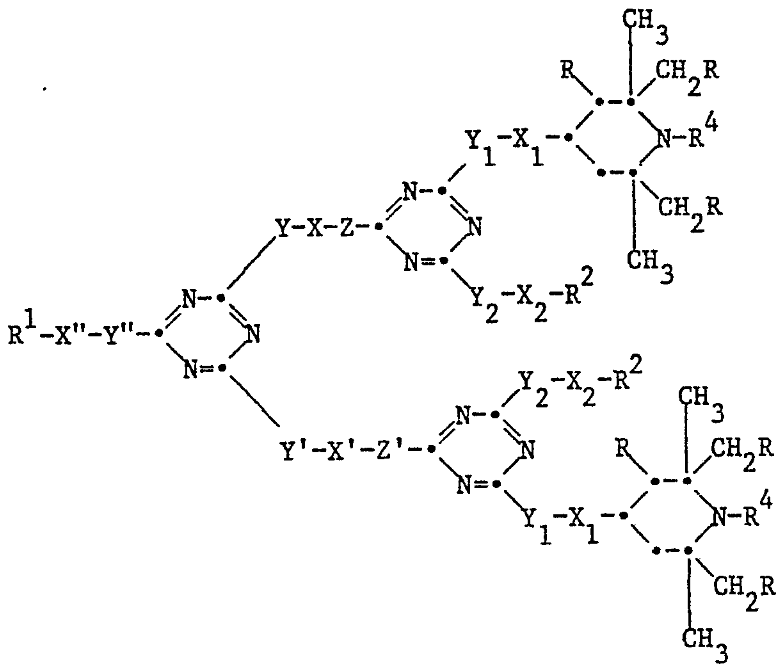

(I)

in which

X and X' are $C_2$-$C_{12}$-alkylene, which can be interrupted by -O-, -S- or -$NR^3$-, or p-xylylene,

X" has one of the meanings defined for X and X' or is a direct bond or a group -$OCH_2CH_2CH_2$-, the O of which is not bonded to Y",

$X_1$ and $X_2$ are a direct bond, $C_1$-$C_4$-alkylene or a group -$OCH_2CH_2CH_2$-, the O of which is not bonded to $Y_1$ or $Y_2$, and

$Y_1$, $Y_2$, Z and Z' are -O-, -S-, -NH- or -$NR^3$-,

Y, Y' and Y" are -O-, -S-, -NH-, -$NR^3$- or -$NR^5$-,

R is hydrogen or methyl,

$R^1$ is hydrogen, $C_1$-$C_{18}$-alkyl, $C_2$-$C_8$-alkoxyalkyl, $C_2$-$C_4$-hydroxyalkyl, $C_5$-$C_{12}$-cycloalkyl, allyl, benzyl, $C_6$-$C_{10}$-aryl or phenyl which is substituted by 1 or 2 $C_1$-$C_8$ alkyl groups and/or OH and/or $C_1$-$C_4$-alkoxy or is a polyalkylpiperidinyl group of the formula II

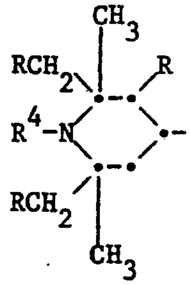

(II)

or, if Y″ is $-NR^3-$ and X″ is a direct bond, $R^1$ and $R^3$ together with the N atom form a pyrrolidine, piperidine or morpholine ring, or $R^1$ is a radical of the formula III

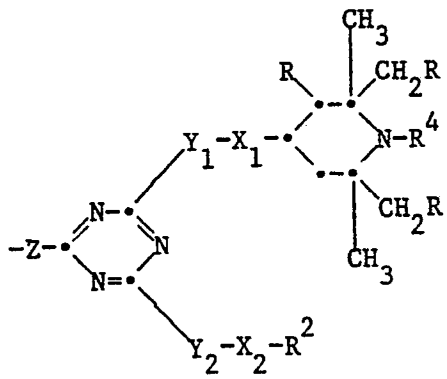

(III)

or the group $R^1$-X″-Y″- is chlorine,

$R^2$ is $C_1$-$C_{18}$ alkyl, $C_2$-$C_8$ alkoxyalkyl, $C_2$-$C_4$ hydroxyalkyl, $C_5$-$C_{12}$ cycloalkyl, allyl, benzyl, $C_6$-$C_{10}$ aryl or phenyl which is substituted by 1 or 2 $C_1$-$C_8$ alkyl groups and/or OH and/or $C_1$-$C_4$ alkoxy or is a polyalkylpiperidinyl group of the formula II or, if $Y_2$ is $-NR^3-$ and $X_2$ is a direct bond, $R^2$ and $R^3$ together with the N atom form a pyrrolidine, piperidine or morpholine ring,

$R^3$ is $C_1$-$C_{18}$ alkyl, $C_2$-$C_8$ alkoxyalkyl, $C_2$-$C_4$ hydroxyalkyl, $C_5$-$C_{12}$ cycloalkyl, allyl, benzyl, $C_6$-$C_{10}$ aryl or phenyl which is substituted by 1 or 2 $C_1$-$C_8$ alkyl groups and/or OH and/or $C_1$-$C_4$ alkoxy or is a polyalkylpiperidinyl group of the formula II,

$R^4$ is hydrogen, $O_0$, $C_1$-$C_{18}$-alkyl, allyl or benzyl and

$R^5$ is a radical of the formula IV

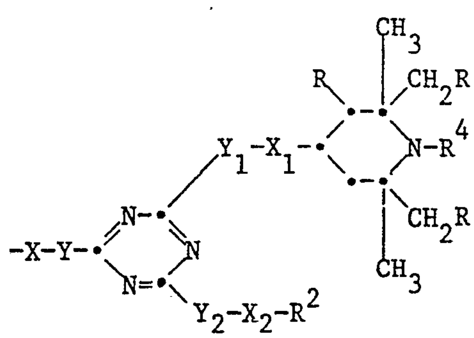

(IV)

2. A compound according to claim 1, of the formula I, in which R is hydrogen.
3. A compound according to claim 1, of the formula I, in which $R^4$ is hydrogen, or methyl.
4. A compound according to claim 1, of the formula I, in which Y, Y′ and Y″ are -O-, -NH- or $-NR^5-$.
5. A compound according to claim 1, of the formula V,

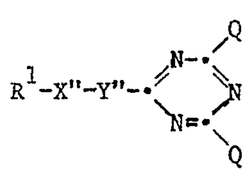

(V)

in which

Q is a radical of the formula VI and

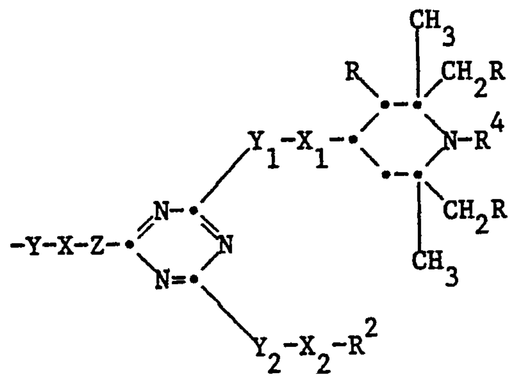

(VI)

$R^1$, X″, Y″, Y, X, $Y^1$, $X^1$, $Y^2$, $X^2$, R and $R^4$ are as defined in claim 1.

6. A compound according to claim 5, of the formula V, in which Q is a group of the formula VII

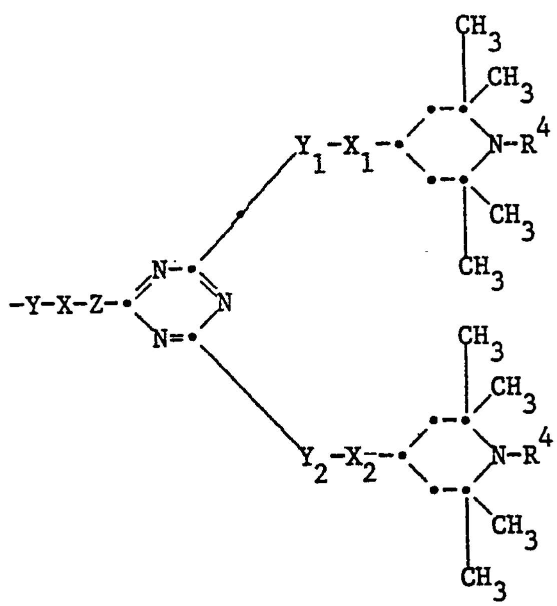

(VII)

in which

X is $C_2$-$C_{12}$-alkylene,

$X_1$ and $X_2$ are a direct bond or $C_1$-$C_4$-alkylene,

Y is -NH- or -$NR^5$-,

$Y_1$ and $Y_2$ are -NH- or -$NR^3$-,

Z is -NH-,

$R^3$ is $C_1$-$C_{12}$-alkyl or a radical of the formula VIII

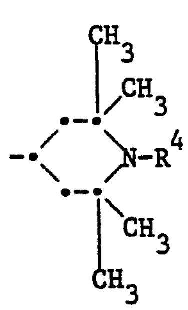

(VIII)

$R^4$ is hydrogen, $C_1$-$C_4$-alkyl, allyl or benzyl and $R^5$ is a radical of the formula IX

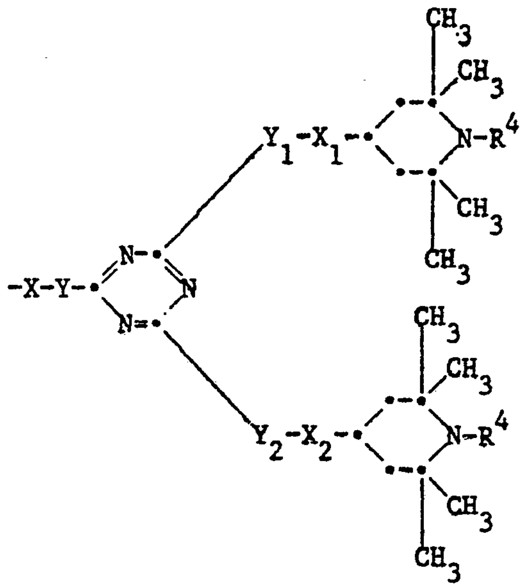

(IX)

7. A compound according to claim 1, of the formula X

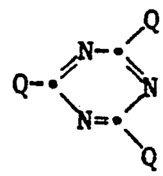

(X)

in which Q is as defined in claim 5.

8. A compound according to claim 7, of the formula X, in which Q is as defined in claim 6.

9. The use of a compound of the formula I of claim 1 as a stabiliser for polymers, especially to protect them against damage by light.

10. A process for stabilising polymers, by adding at least one compound of the formula I of claim 1.

11. A polymer composition stabilised against the action of light, which contains 0.01 to 5 % by weight of at least one compound of the formula I of claim 1.

12. A polymer composition according to claim 11, wherein the polymer is a polyolefin.

13. A polymer composition according to claim 11, wherein the polymer is a binder for a lacquer.

**Revendications**

1. Composés répondant à la formule I

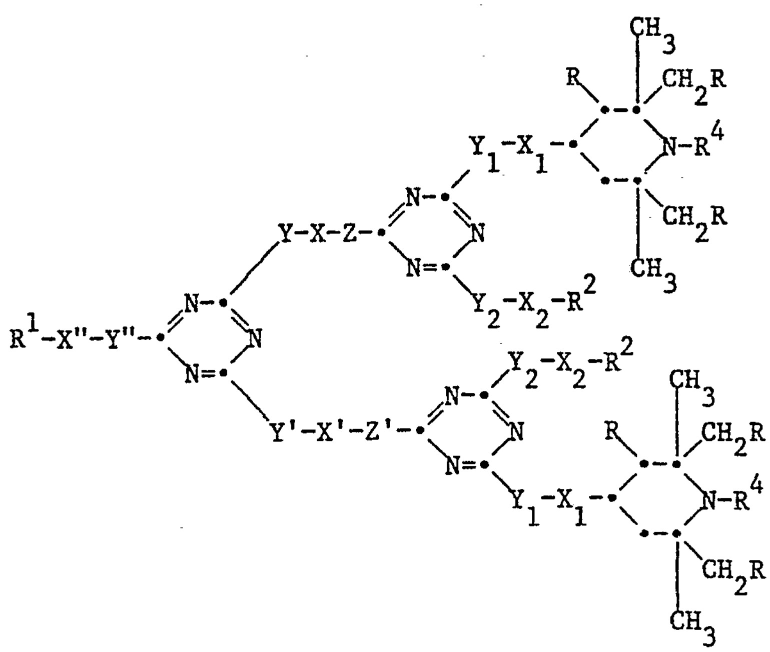

(I)

dans laquelle

X et X′ représentent chacun un radical alkylène en $C_2$-$C_{12}$, qui peut être interrompu par -O-, -S- ou -$NR^3$-, ou un radical p-xylylène,

X″ a l'une des significations qui viennent d'être données pour X et X′ ou représente une liaison directe ou encore un radical -$OCH_2CH_2CH_2$- dont l'atome d'oxygène n'est pas relié à Y″,

$X_1$ et $X_2$ représentent chacun une liaison directe, un radical alkylène en $C_1$-$C_4$ ou un radical -$OCH_2CH_2CH_2$- dont l'atome d'oxygène n'est pas relié à $Y_1$ ou $Y_2$,

$Y_1$, $Y_2$, Z et Z′ représentent chacun -O-, -S-, -NH- ou -$NR^3$-,

Y, Y′ et Y″ représentent chacun -O-, -S-, -NH-, -$NR^3$- ou -$NR^5$,

R représente l'hydrogène ou un radical méthyle,

$R^1$ représente l'hydrogène, un alkyle en $C_1$-$C_{18}$, un alcoxyalkyle en $C_2$-$C_8$, un hydroxyalkyle en $C_2$-$C_4$, un cycloalkyle en $C_5$-$C_{12}$, un allyle, un benzyle, un aryle en $C_6$-$C_{10}$, un phényle porteur d'un ou deux substituants pris dans l'ensemble constitué par les alkyles en $C_1$-$C_8$, le groupe -OH et les alcoxy en $C_1$-$C_4$, ou représente un radical polyalkyl-pipéridyle de formule II

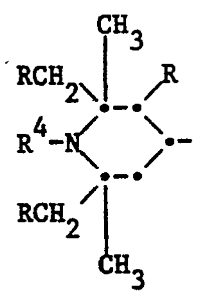

(II)

ou, dans le cas ou Y″ est -$NR^3$- et X″ une liaison directe, $R^1$ et $R^3$ forment ensemble, et avec l'atome d'azote, un noyau de pyrrolidine, de pipéridine ou de morpholine, ou $R^1$ représente un radical de formule III

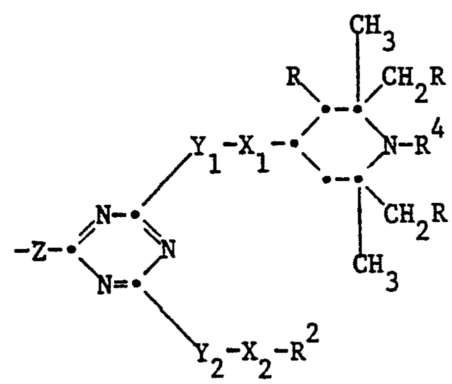

(III)

ou l'ensemble $R^1$-X″-Y″- représente le chlore,

$R^2$ représente un alkyle en $C_1$-$C_{18}$, un alcoxyalkyle en $C_2$-$C_8$, un hydroxyalkyle en $C_2$-$C_4$, un cycloalkyle en $C_5$-$C_{12}$, un allyle, un benzyle, un aryle en $C_6$-$C_{10}$, un phényle porteur d'un ou deux substituants pris dans l'ensemble constitué par les alkyles en $C_1$-$C_8$, le groupe -OH et les alcoxy en $C_1$-$C_4$, ou un radical polyalkyl-pipéridyle de formule II, ou, dans le cas où $Y_2$ représente -$NR^3$- et $X_2$ une liaison directe, $R^2$ et $R^3$ forment ensemble, et avec l'atome d'azote, un noyau de pyrrolidine, de pipéridine ou de morpholine,

$R^3$ représente un alkyle en $C_1$-$C_{18}$, un alcoxyalkyle en $C_2$-$C_8$, un hydroxyalkyle en $C_2$-$C_4$, un cycloalkyle en $C_5$-$C_{12}$, un allyle, un benzyle, un aryle en $C_6$-$C_{10}$, un phényle porteur d'un ou deux substituants pris dans l'ensemble constitué par les alkyles en $C_1$-$C_8$, le groupe -OH et les alcoxy en $C_1$-$C_4$, ou un radical polyalkyl-pipéridyle de formule II,

$R^4$ représente l'hydrogène, $O_0$, un alkyle en $C_1$-$C_{18}$, un allyle ou un benzyle et

$R^5$ représente un radical de formule IV

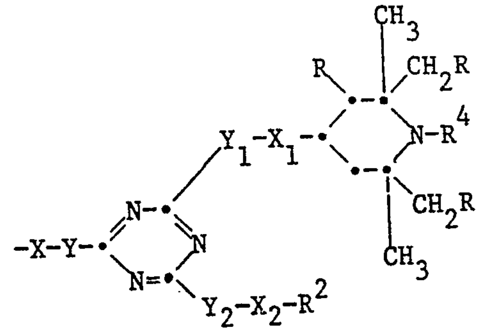

(IV)

2. Composés de formule I selon la revendication 1 dans lesquels R représente l'hydrogène.

3. Composés de formule I selon la revendication 1 dans lesquels $R^4$ représente l'hydrogène ou un radical méthyle.

4. Composés de formule I selon la revendication 1 dans lesquels Y, Y' et Y" représentent -O-, -NH-, ou $-NR^5-$.

5. Composés selon la revendication 1, qui répondent à la formule V.

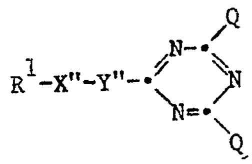

(V)

dans laquelle

Q représente un radical de formule VI et

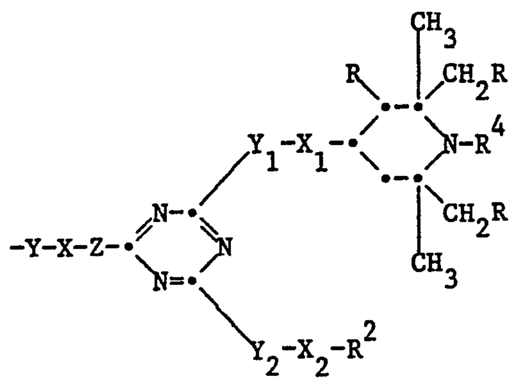

(VI)

$R^1$, X", Y", Y, X, $Y_1$, $X^1$, $Y^2$, $X^2$, R et $R_4$ ont les significations données à la revendication 1.

6. Composés de formule V selon la revendication 5, dans lesquels Q représente un radical répondant à la formule VII

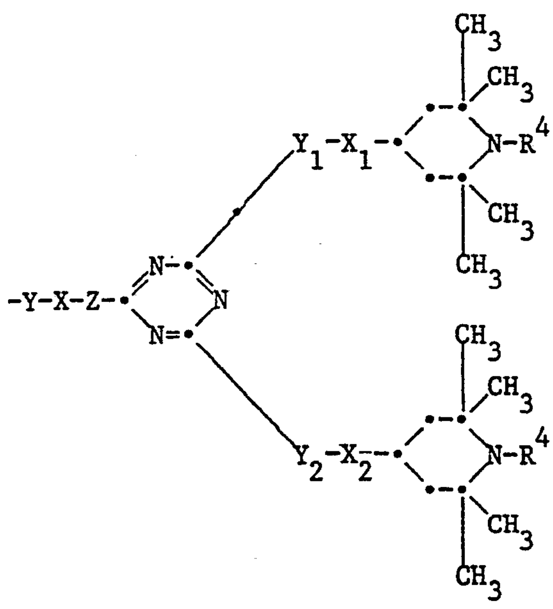

(VII)

dans laquelle

X représente un alkylène en $C_2$-$C_{12}$,

$X^1$ et $X^2$ représentent une liaison directe ou un alkylène en $C_1$-$C_4$,

Y représente -NH- ou $-NR^5-$,

$Y_1$ et $Y_2$ représentent -NH- ou $-NR^3-$,

Z représente -NH-,

$R^3$ représente un alkyle en $C_1$-$C_{12}$ ou un radical de formule VIII

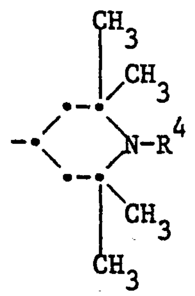

(VIII)

$R^4$ représente l'hydrogène, un alkyle en $C_1$-$C_4$, un allyle ou un benzyle et $R^5$ représente un radical de formule IX

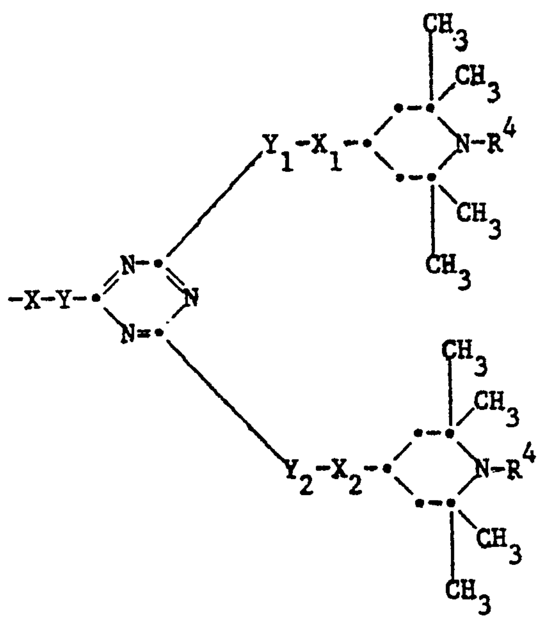

(IX)

7. Composés selon la revendication 1, qui répondent à la formule X

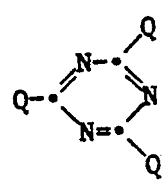

(X)

dans laquelle Q a la signification donnée à la revendication 5.

8. Composés de formule X selon la revendication 7, dans lesquels Q a la signification donnée à la revendication 6.

9. Application de composés de formule I selon la revendication 1 en tant que stabilisants pour des polymères, plus particulièrement contre la destruction par la lumière.

10. Procédé pour stabiliser des polymères par addition d'au moins un composé de formule I selon la revendication 1.

11. Composition polymère stabilisée contre l'action de la lumière, composition caractérisée en ce qu'elle contient de 0,01 à 5 % en poids d'au moins un composé de formule I selon la revendication 1.

12. Composition polymère selon la revendication 11, caractérisée en ce que le polymère est une polyoléfine.

13. Composition polymère selon la revendication 11, caractérisée en ce que le polymère est un liant pour peinture ou vernis.